# EUROPÄISCHE PATENTANMELDUNG

(11) **EP 3 296 105 A1**
(43) Veröffentlichungstag der Anmeldung: **21.03.2018**
(21) Anmeldenummer: 17191604.2
(22) Anmeldetag: 18.09.2017
(51) Int. Cl.: B32B 17/10, E06B 3/54, E06B 5/00

(54) **GLASELEMENT**

(30) Priorität: 19.09.2016 DE 102016217917
(71) Anmelder: PR Germany GmbH, 50678 Köln (DE)
(72) Erfinder: Reinecke, Peter, 51588 Nümbrecht (DE)
(74) Vertreter: Tongbhoyai, Martin

(57) **Zusammenfassung**

Die Erfindung betrifft ein Glaselement (1) mit mindestens einer ersten Scheibe (2), die aus Glas gebildet ist, mindestens einer zweiten Scheibe (3) und mit mindestens einer Zwischenschicht (8), wobei die Zwischenschicht (8) zwischen der ersten Scheibe (2) und der zweiten Scheibe (3) angeordnet ist. Die erste Scheibe (2) weist eine erste Seite (4) und eine zweite Seite (5) auf, wobei die erste Seite (4) an der Zwischenschicht (8) angeordnet ist. Eine Adaptereinheit (15) ist an der ersten Seite (4) der ersten Scheibe (2) verklebt und weist eine Abstandsplatte (9) auf. Die Zwischenschicht (8) erstreckt sich von der ersten Scheibe (2) bis zur zweiten Scheibe (3) mit einer ersten Längsausdehnung (L1). Die Abstandspatte (9) erstreckt sich von der ersten Scheibe (2) bis zur zweiten Scheibe (3) mit einer zweiten Längsausdehnung (L2). Die erste Längsausdehnung (L1) ist identisch zur zweiten Längsausdehnung (L2).

## Beschreibung

Die Erfindung betrifft ein Glaselement, beispielsweise ein Glasfenster, eine Glastrennwand oder eine Glastür für eine Dusche.

Derartige Glaselemente des Standes der Technik werden in der Regel aus Verbundsicherheitsglas hergestellt. Ein Verbundsicherheitsglas ist ein Verbund aus zwei Glasscheiben (nämlich einer ersten Glasscheibe und einer zweiten Glasscheibe), zwischen denen eine reißfeste Folie angeordnet ist. Die Folie ist beispielsweise aus Polyvinylbutyral (PVB) oder Ethylenvinylacetat (EVA) hergestellt. Eine feste Verbindung zwischen den beiden Glasscheiben und der Folie wird mittels einer Laminierung erreicht. Bei der Laminierung werden beispielsweise die beiden Glasscheiben und die Folie aufeinandergepresst und anschließend geheizt. Hierdurch wird eine dauerhafte Verbindung zwischen den beiden Glasscheiben und der Folie geschaffen.

Ferner sind aus dem Stand der Technik Glaselemente bekannt, die einen durch mindestens zwei Glasscheiben und/oder mindestens zwei als Verbundsicherheitsglas ausgebildeten Glaseinheiten gebildeten Hohlraum aufweisen, in dem ein Isoliergas eingelassen ist. Ein derartiges Glaselement ist auch unter der Bezeichnung Isolierglas oder Mehrscheiben-Isolierglas bekannt.

Um ein bekanntes Glaselement zu befestigen oder um Bauteile an einem bekannten Glaselement zu befestigen, werden Scharniere und/oder Beschläge an dem bekannten Glaselement angeordnet. Hierzu wird bei dem bekannten Glaselement in den beiden Glasscheiben jeweils eine Durchgangsbohrung angeordnet. Die beiden Durchgangsbohrungen der Glasscheiben fluchten miteinander. Durch die Durchgangsbohrungen ragt eine Befestigungseinheit des Beschlags und/oder des Scharniers. Die Verwendung von Durchgangsbohrungen weist jedoch den Nachteil auf, dass Außenflächen des Glaselements nicht vollständig eben sind. Beim Reinigen der Glaselemente durch Abziehen der Glaselemente mit einem Abzieher stößt man daher leicht an die Befestigungseinheit. Eine schnelle und ausreichend gute Reinigung des Glaselements mit dem Abzieher wird demnach erschwert. Ferner kann beispielsweise Wasser durch die Durchgangsbohrungen treten. Dies ist zum einen unerwünscht und zum anderen fördert das Eindringen von Wasser eine Delaminierung, also das Lösen der beiden Glasscheiben und der Folie voneinander. Dies ist nicht gewünscht.

Wenn Durchgangsbohrungen durch Glasscheiben eines Isolierglases verlaufen, kann Gas aus dem Hohlraum ausweichen. Aus diesem Grunde ist es beim Stand der Technik vorgesehen, mindestens ein Gasdichtungselement in Form eines Rohres durch die Durchgangsbohrungen zu legen. Dies ist sehr aufwendig und entsprechend kostenintensiv.

Darüber hinaus ist es bei den bekannten Glaselementen vorgesehen, dass Beschläge und/oder Scharniere an den Glaselementen durch Druck von der Außenseite der ersten Glasscheibe in Richtung der Folie und durch Druck von der Außenseite der zweiten Glasscheibe in Richtung der Folie befestigt werden. Dies kann aber im Bereich des Beschlags und/oder des Scharniers zu einer Quetschung der Folie führen. Eine derartige Quetschung mindert die Funktion der Folie im Verbundsicherheitsglas. Somit wird der Verbund der beiden Glasscheiben und der Folie geschwächt. Darüber hinaus erzeugt dieser Druck Scherbewegungen und Schwingungsbewegungen im Bereich des Beschlags, so dass Luft, Feuchtigkeit oder gegebenenfalls Chemikalien in den Verbund eindringen und eine Delaminierung verursachen können.

Der Erfindung liegt die Aufgabe zugrunde, ein Glaselement aus Verbundsicherheitsglas mit einer Befestigung eines Beschlags anzugeben, bei dem der Verbund zwischen Glasscheiben und Folie ohne äußere Einflüsse ausreichend stabil ist.

Diese Aufgabe wird erfindungsgemäß mit einem Glaselement mit den Merkmalen des Anspruchs 1 gelöst. Weitere Merkmale der Erfindung ergeben sich aus der beigefügten Beschreibung, den beigefügten Ansprüchen und/oder den beigefügten Zeichnungen.

Das erfindungsgemäße Glaselement weist mindestens eine erste Scheibe auf, die aus Glas gebildet ist. Darüber hinaus weist das erfindungsgemäße Glaselement mindestens eine zweite Scheibe auf. Zwischen der ersten Scheibe und der zweiten Scheibe ist eine Zwischenschicht angeordnet. Die Zwischenschicht ist beispielsweise als Folie ausgebildet. Somit ist es bei dem erfindungsgemäßen Glaselement vorgesehen, dass die erste Scheibe an der Zwischenschicht angeordnet ist und dass wiederum die Zwischenschicht an der zweiten Scheibe angeordnet ist.

Ferner ist es bei dem erfindungsgemäßen Glaselement vorgesehen, dass die erste Scheibe eine erste Seite und eine zweite Seite aufweist. Insbesondere ist es vorgesehen, dass die erste Seite der zweiten Seite gegenüberliegend angeordnet ist. Die erste Seite der ersten Scheibe ist an der Zwischenschicht angeordnet. Demnach ist die erste Seite als eine Innenseite der ersten Scheibe ausgebildet. Hingegen ist die zweite Seite der ersten Scheibe als eine Außenseite der ersten Scheibe ausgebildet. Die zweite Scheibe weist beispielsweise eine dritte Seite und eine vierte Seite auf. Insbesondere ist es vorgesehen, dass die dritte Seite der vierten Seite gegenüberliegend angeordnet ist. Die dritte Seite der zweiten Scheibe ist an der Zwischenschicht angeordnet. Demnach ist die dritte Seite als eine Innenseite der zweiten Scheibe ausgebildet. Hingegen ist die vierte Seite der zweiten Scheibe als eine Außenseite der zweiten Scheibe ausgebildet.

Das erfindungsgemäße Glaselement weist auch eine Adaptereinheit auf. Insbesondere ist es vorgesehen, dass die Adaptereinheit aus Metall gebildet ist. Beispielsweise ist die Adaptereinheit aus Edelstahl gebildet. Ferner ist es beispielsweise vorgesehen, dass die Adaptereinheit vollständig oder auch nur teilweise aus Metall gebildet ist. Als Metall eignet sich beispielsweise Edelstahl. Die Erfindung ist hierauf aber nicht eingeschränkt. Vielmehr ist jedes Metall oder jede metallische Zusammensetzung verwendbar, die für die Erfindung geeignet ist. Insbesondere ist es vorgesehen, dass die Adaptereinheit aus einem Material gebildet ist, das eine Festigkeit wie Metall aufweist. Beispielsweise ist die Adaptereinheit aus Keramik gefertigt.

Es ist nun vorgesehen, dass die Adaptereinheit an der ersten Seite der ersten Scheibe mittels eines aushärtbaren Glas/Materialklebers, insbesondere eines Glas/Metallklebers verklebt ist. Mit anderen Worten ausgedrückt, ist die Adaptereinheit durch Verklebung mittels des aushärtbaren Glas/Materialklebers an der ersten Seite der ersten Scheibe befestigt. Es ist insbesondere vorgesehen, dass die Adaptereinheit die Außenflächen der ersten Scheibe und der zweiten Scheibe nicht überragt. Die Adaptereinheit dient der Aufnahme von Bauteilen, beispielsweise von Befestigungseinheiten eines Beschlags und/oder eines Scharniers.

Die Adaptereinheit des erfindungsgemäßen Glaselements weist mindestens eine Abstandsplatte auf, die sich entlang der ersten Scheibe und der zweiten Scheibe erstreckt. Beispielsweise erstreckt die die Abstandsplatte nur entlang eines vorgegebenen Teils der ersten Scheibe und der zweiten Scheibe. Ferner erstreckt sich die Abstandsplatte beispielsweise zwischen der ersten Scheibe und der zweiten Scheibe und beabstandet somit die erste Scheibe von der zweiten Scheibe. Insbesondere ist es vorgesehen, dass die Abstandsplatte sich nicht entlang der gesamten ersten Scheibe und der gesamten zweiten Scheibe erstreckt. Die Abstandsplatte ist insbesondere aus Edelstahl gebildet. Die Erfindung ist hierauf aber nicht eingeschränkt. Vielmehr ist jedes Metall oder jede metallische Zusammensetzung verwendbar, die für die Erfindung geeignet ist. Insofern kann bei weiteren Ausführungsformen die Abstandsplatte aus Aluminium und/oder einem Material gebildet sein, das eine Festigkeit wie Metall aufweist. Beispielsweise kann die Abstandsplatte aus Keramik und/oder einem Kunststoff gefertigt sein, der eine Festigkeit wie Metall aufweist.

Die Zwischenschicht umgibt die Abstandsplatte. Mit anderen Worten ausgedrückt, ist die Zwischenschicht um die Abstandsplatte herum angeordnet. Die Zwischenschicht erstreckt sich von der ersten Scheibe bis zur zweiten Scheibe mit einer ersten Längsausdehnung. Somit weist die Zwischenschicht eine Dicke zwischen der ersten Scheibe und der zweiten Scheibe auf, die der ersten Längsausdehnung entspricht. Darüber hinaus erstreckt sich die Abstandsplatte von der ersten Scheibe bis zur zweiten Scheibe mit einer zweiten Längsausdehnung. Demnach weist die Abstandsplatte eine Dicke zwischen der ersten Scheibe und der zweiten Scheibe auf, die der zweiten Längsausdehnung entspricht. Bei dem erfindungsgemäßen Glaselement ist die erste Längsausdehnung identisch oder im Wesentlichen identisch zur zweiten Längsausdehnung. Mit anderen Worten ausgedrückt, weist die Zwischenschicht dieselbe Dicke wie die Abstandsplatte auf. Die erste Längsausdehnung und die zweite Längsausdehnung betragen beispielsweise bis zu 1 mm, bis zu 3 mm oder bis zu 5 mm. Die Erfindung ist aber auf diese Werte der ersten Längsausdehnung oder der zweiten Längsausdehnung nicht eingeschränkt. Vielmehr können die erste Längsausdehnung und die zweite Längsausdehnung jeden geeigneten Wert aufweisen.

Die Erfindung weist den Vorteil auf, dass selbst bei Ausübung von Druck von der Außenseite der ersten Scheibe in Richtung der Zwischenschicht und von der Außenseite der zweiten Scheibe in Richtung der Zwischenschicht keine Quetschung der Zwischenschicht im Bereich eines Beschlag und/oder eines Scharniers erfolgt. Die oben genannte Abstandsplatte verhindert diese Quetschung. Somit wird stets die Funktion der Zwischenschicht, die beispielsweise als Folie ausgebildet ist, im Verbundsicherheitsglas gewährleistet.

Ferner ermöglicht die Erfindung, dass Scherbewegungen und Schwingungsbewegungen im Bereich des Beschlags verringert werden, so dass wenig Luft, Feuchtigkeit und wenig Chemikalien in den Verbund aus der ersten Scheibe, der zweiten Scheibe und der Zwischenschicht eindringen und eine Delaminierung verursachen können. Es ist vorgesehen, dass bei einer Ausführungsform des erfindungsgemäßen Glaselements nur eine der beiden Scheiben eine Durchgangsbohrung aufweist. Somit weist die andere der beiden Scheiben eine Seite mit einer Scheibenfläche auf, die eben ausgebildet ist. Ein Abziehen dieser Seite mit einem Abzieher zur Reinigung und Trockenlegung dieser Seite ist dann einfach möglich.

Die Erfindung gewährleistet auch die Anordnung eines Beschlags und/oder eines Scharniers an einem mehrscheibigen Isolierglas, da nur eine der Scheiben eine Durchgangsöffnung aufweisen kann. Der Hohlraum, welcher das Isoliergas aufweist und welcher durch weitere Scheiben gebildet ist, ist weiterhin dicht umfasst, so dass kein Gas aus dem Hohlraum des Isolierglases austreten kann und/oder keine aufwendigen Abdichtungsmaßnahmen vorgenommen werden müssen.

Das erfindungsgemäße Glaselement ist beispielsweise als ein rahmenloses Glaselement ausgebildet. Bei weiteren Ausführungsformen ist das erfindungsgemäße Glaselement als eine Tür, als eine Glaswand und/oder als ein Fenster ausgebildet. Beispielsweise ist das erfindungsgemäße Glaselement als eine Tür einer Dusche ausgebildet. Es wird explizit darauf hingewiesen, dass die Erfindung auf die vorgenannten Verwendungen nicht eingeschränkt ist. Vielmehr kann das erfindungsgemäße Glaselement für jeglichen Einsatzzweck verwendet werden.

Je nach Dicke der ersten Scheibe und der zweiten Scheibe und der gewünschten Lastabtragung einer an dem Glaselement angeordneten Last kann die Form und die Längsausdehnung der Abstandsplatte gewählt werden. Somit ist stets gewährleistet, dass eine ausreichende Lastabtragung zur Verfügung gestellt wird. Darüber hinaus gewährleistet die Erfindung eine besonders gute Ästhetik. Wenn nur eine der Scheiben eine Durchgangsbohrung aufweist, ist die andere Scheibe ausschließlich flächenbündig ausgebildet. Man sieht von der Außenseite der anderen Scheibe ausschließlich die Abstandsplatte, welche beispielsweise die Form eines Beschlags aufweisen kann.

Bei einer Ausführungsform des erfindungsgemäßen Glaselements ist es zusätzlich oder alternativ vorgesehen, dass die Adaptereinheit mindestens eine Befestigungseinheit aufweist, welche an einer Durchgangsöffnung der zweiten Scheibe angeordnet ist. Insbesondere ist es vorgesehen, dass die Befestigungseinheit durch die Durchgangsöffnung an der zweiten Scheibe für einen Nutzer zur Montage von weiteren Einheiten an dem Glaselement zugänglich ist. Die erste Scheibe kann bei dieser Ausführungsform keine Durchgangsöffnung aufweisen. Die Befestigungseinheit ist derart in der Durchgangsöffnung der zweiten Scheibe angeordnet, dass ein Rand der Durchgangsöffnung von der Befestigungseinheit nicht berührt wird. Beispielsweise ist es vorgesehen, dass die Befestigungseinheit als Gewindeelement ausgebildet ist. Diese Ausführungsform weist den Vorteil auf, dass eine Lastabtragung einer an der Befestigungseinheit angeordneten Last (beispielsweise ein Scharnier) mittig im Verbund zwischen der ersten Scheibe, der Folie und der zweiten Scheibe erfolgt. Die Durchgangsöffnung der zweiten Scheibe wird im Grunde genommen nicht belastet. Auf diese Weise werden hohe Lastabtragungen erzielt.

Bei einer weiteren Ausführungsform des erfindungsgemäßen Glaselements ist es zusätzlich oder alternativ vorgesehen, dass das Glaselement mehrerer Befestigungseinheiten aufweist. Beispielsweise ist Befestigungseinheit als eine erste Befestigungseinheit ausgebildet. Die Adaptereinheit dieser Ausführungsform weist zusätzlich eine zweite Befestigungseinheit auf. Die zweite Befestigungseinheit ist an einer Durchgangsöffnung der ersten Scheibe angeordnet. Somit ist es bei dieser Ausführungsform vorgesehen, dass sowohl in der ersten Scheibe als auch in der zweiten Scheibe jeweils eine Durchgangsöffnung und eine Befestigungseinheit angeordnet sind. Insbesondere ist es vorgesehen, dass die zweite Befestigungseinheit als ein Gewindeelement ausgebildet ist. Die zweite Befestigungseinheit ist beispielsweise derart angeordnet, dass die zweite Befestigungseinheit einen Rand der Durchgangsöffnung der ersten Scheibe nicht berührt.

Bei einer wiederum weiteren Ausführungsform des erfindungsgemäßen Glaselements ist es zusätzlich oder alternativ vorgesehen, dass der Glas/Materialkleber, insbesondere der Glas/Metallkleber, ein mittels Licht aushärtbarer Kleber auf Acrylatbasis ist. Beispielsweise ist der Glas/Materialkleber, insbesondere der Glas/Metallkleber durch UV-Licht aushärtbar. Darüber hinaus ist es beispielsweise vorgesehen, dass der Glas/Materialkleber, insbesondere der Glas/Metallkleber, eine thermische Beständigkeit bis 120 °C aufweist. Bei einer wiederum weiteren Ausführungsform ist es vorgesehen, dass der Glas/Materialkleber, insbesondere der Glas/Metallkleber kurzzeitig auch eine Beständigkeit bis 150 °C aufweisen kann.

Bei einer Ausführungsform des erfindungsgemäßen Glaselements ist es zusätzlich oder alternativ vorgesehen, dass die erste Scheibe, die zweite Scheibe und/oder die Zwischenschicht transparent ausgebildet sind/ist.

Bei dem erfindungsgemäßen Glaselement ist es insbesondere vorgesehen, dass die Zwischenschicht aus Polyvinylbutyral (PVB) und/oder Ethylenvinylacetat (EVA) ausgebildet ist. Darüber hinaus ist es bei einer weiteren Ausführungsform des erfindungsgemäßen Glaselements zusätzlich oder alternativ vorgesehen, dass die Zwischenschicht mehrschichtig ausgebildet ist. So ist es beispielsweise vorgesehen, dass die Zwischenschicht mindestens eine erste Schicht und mindestens eine zweite Schicht aufweist. Eine weitere Ausführungsform sieht vor, mindestens drei Schichten, also eine erste Schicht, eine zweite Schicht und eine dritte Schicht zu verwenden. Die erste Längsausdehnung der Zwischenschicht, welche durch sämtliche Schichten gebildet wird, bleibt jedoch immer identisch zur zweiten Längsausdehnung der Abstandsplatte.

Bei einer wiederum weiteren Ausführungsform des erfindungsgemäßen Glaselements ist es zusätzlich oder alternativ vorgesehen, dass die zweite Scheibe aus Glas oder aus Kunststoff gebildet ist. Demnach ist es nicht zwingend notwendig, dass die zweite Scheibe aus Glas gebildet ist. Sie kann auch aus einem Kunststoff, beispielsweise aus Plexiglas gebildet sein.

Die Erfindung wird nachfolgend anhand von Ausführungsformen näher beschrieben. Dabei zeigen
- Fig. 1: eine geschnittene Ansicht einer ersten Ausführungsform eines Glaselements mit einer Adaptereinheit;
- Fig. 2: eine geschnittene Ansicht einer zweiten Ausführungsform eines Glaselements mit einer Adaptereinheit; sowie
- Fig. 3: eine geschnittene Ansicht einer dritten Ausführungsform eines Glaselements mit einer Adaptereinheit.

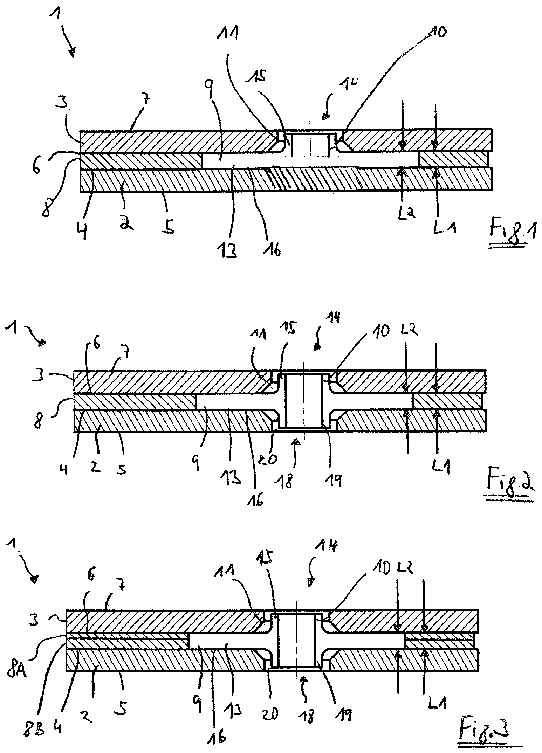

**Figur 1** zeigt eine geschnittene Ansicht eines Glaselements 1 gemäß der Erfindung. Das Glaselement 1 ist beispielsweise als eine Tür, als eine Glaswand und/oder als ein Fenster ausgebildet. Beispielsweise ist das erfindungsgemäße Glaselement 1 als eine Tür einer Dusche ausgebildet. Es wird explizit darauf hingewiesen, dass die Erfindung auf die vorgenannte Verwendung nicht eingeschränkt ist. Vielmehr kann das erfindungsgemäße Glaselement 1 für jeglichen geeigneten Einsatzzweck verwendet werden.

Das Glaselement 1 weist eine erste Scheibe 2 auf, die aus Glas gebildet ist. Die erste Scheibe 2 weist eine erste Seite 4 und eine zweite Seite 5 auf. Die erste Seite 4 ist der zweiten Seite 5 gegenüberliegend angeordnet. Darüber hinaus weist das erfindungsgemäße Glaselement 1 eine zweite Scheibe 3 auf, die mit einer ersten Seite 6 und einer zweiten Seite 7 versehen ist. Die erste Seite 6 der zweiten Scheibe 3 und die zweite Seite 7 der zweiten Scheibe 3 sind gegenüberliegend angeordnet. Sowohl die erste Scheibe 2 als auch die zweite Scheibe 3 sind aus Einscheiben-Sicherheitsglas (ESG) mit einer Dicke von 4 mm gebildet. Es wird darauf hingewiesen, dass die Erfindung nicht auf diese Ausführungsform eingeschränkt ist. Vielmehr kann bei der Erfindung jegliche Glasstärke verwendet werden, die für die Erfindung geeignet ist. Darüber hinaus ist es nicht zwingend erforderlich, dass die zweite Scheibe 3 aus Glas gebildet ist. Vielmehr kann die zweite Scheibe 3 auch aus Kunststoff, insbesondere aus Plexiglas gebildet sein.

Zwischen der ersten Scheibe 2 und der zweiten Scheibe 3 ist eine Zwischenschicht 8 angeordnet. Die Zwischenschicht 8 ist derart an der ersten Scheibe 2 und der zweiten Scheibe 3 angeordnet, dass ein Zwischenraum zwischen der ersten Scheibe 2 und der zweiten Scheibe 3 im Wesentlichen vollständig ausgefüllt ist.

Die erste Seite 4 der ersten Scheibe 2 ist im Grunde eine Innenseite der ersten Scheibe 2. Hingegen ist die zweite Seite 5 der ersten Scheibe 2 als eine Außenseite der ersten Scheibe 2 ausgebildet. Etwas Ähnliches gilt für die zweite Scheibe 3. Hier ist die erste Seite 6 der zweiten Scheibe 3 im Grunde eine Innenseite der zweiten Scheibe 3. Hingegen ist die zweite Seite 7 der zweiten Scheibe 3 als eine Außenseite der zweiten Scheibe 2 ausgebildet.

Die Zwischenschicht 8 ist sowohl an der ersten Seite 4 der ersten Scheibe 2 als auch an der ersten Seite 6 der zweiten Scheibe 3 angeordnet. Die Zwischenschicht 8 ist aus Polyvinylbutyral (PVB) oder Ethylenvinylacetat (EVA) gebildet. Die Anordnung der Zwischenschicht 8 an der ersten Seite 4 und an der ersten Seite 6 erfolgt beispielsweise durch Laminierung, die bereits weiter oben erläutert wurde und auf die hier nun Bezug genommen wird.

Ferner ist es bei dieser Ausführungsform des Glaselements 1 vorgesehen, dass die erste Scheibe 2, die zweite Scheibe 3 und die Zwischenschicht 8 jeweils aus einem transparenten Material gebildet sind.

Das erfindungsgemäße Glaselement 1 weist einen Teilbereich 13 auf, in dem die Zwischenschicht 8 unterbrochen ist. An dem Teilbereich 13 ist eine erste Durchgangsöffnung 14 der zweiten Scheibe 3 angeordnet. Darüber hinaus ist im Teilbereich 13 eine Adaptereinheit 15 aus Metall mit einem Kleber 16 auf Acrylatbasis an die erste Seite 4 der ersten Scheibe 2 angeklebt. Der Kleber 16 ist mittels Licht aushärtbar, beispielsweise mittels UV-Licht. Um die erste Scheibe 2, die Zwischenschicht 8, die zweite Scheibe 3 sowie die Adaptereinheit 15 fest aneinander anzuordnen, ist es beispielsweise vorgesehen, durch eine Wärmebehandlung die vorgenannten Einheiten miteinander zu verbinden. Eine derartige Wärmebehandlung ist beispielsweise in der DE 10 2007 017 971 A1 offenbart, deren Inhalt hier vollständig mit in diese Anmeldung aufgenommen wird. Das Glaselement 1 ist somit als ein Verbundelement ausgebildet.

Die Adaptereinheit 15 ist beispielsweise aus Edelstahl gebildet. Die Erfindung ist hierauf aber nicht eingeschränkt. Vielmehr ist jedes Metall oder jede metallische Zusammensetzung verwendbar, die für die Erfindung geeignet ist. Insbesondere ist es vorgesehen, dass die Adaptereinheit 15 aus einem Material gebildet ist, das eine Festigkeit wie Metall aufweist. Beispielsweise ist die Adaptereinheit 15 aus Keramik gefertigt.

Die Adaptereinheit 15 des Glaselements 1 weist eine Abstandsplatte 9 in Form einer Metallplatte auf, die sich im Teilbereich 13 entlang der ersten Scheibe 2 und der zweiten Scheibe 3 erstreckt. Die Abstandsplatte 9 ist von der Zwischenschicht 8 umgeben. Im Grunde ersetzt die Abstandsplatte 9 die Zwischenschicht 8 im Teilbereich 13. Die Abstandsplatte 9 ist aus Edelstahl gebildet. Die Erfindung ist hierauf aber nicht eingeschränkt. Vielmehr ist jedes Metall oder jede metallische Zusammensetzung verwendbar, die für die Erfindung geeignet ist. Insofern kann bei weiteren Ausführungsformen die Abstandsplatte 9 aus Aluminium und/oder einem Material gebildet sein, das eine Festigkeit wie Metall aufweist. Beispielsweise kann die Abstandsplatte 9 aus Keramik und/oder einem Kunststoff gefertigt sein, der eine Festigkeit wie Metall aufweist.

Die Zwischenschicht 8 erstreckt sich von der ersten Scheibe 2 bis zur zweiten Scheibe 3 mit einer ersten Längsausdehnung L1. Somit weist die Zwischenschicht 8 eine Dicke zwischen der ersten Scheibe 2 und der zweiten Scheibe 3 auf, die der ersten Längsausdehnung L1 entspricht. Darüber hinaus erstreckt sich die Abstandsplatte 9 von der ersten Scheibe 2 bis zur zweiten Scheibe 3 mit einer zweiten Längsausdehnung L2. Demnach weist die Abstandsplatte 9 eine Dicke zwischen der ersten Scheibe 2 und der zweiten Scheibe 3 auf, die der zweiten Längsausdehnung L2 entspricht. Bei dem Glaselement 1 ist die erste Längsausdehnung L1 identisch zur zweiten Längsausdehnung L2. Mit anderen Worten ausgedrückt, weist die Zwischenschicht 8 dieselbe Dicke wie die Abstandsplatte 9 auf. Die erste Längsausdehnung L1 und die zweite Längsausdehnung L2 betragen beispielsweise bis zu 1 mm, bis zu 3 mm oder bis zu 5 mm. Die Erfindung ist aber auf diese Werte der ersten Längsausdehnung L1 oder der zweiten Längsausdehnung L2 nicht eingeschränkt. Vielmehr können die erste Längsausdehnung L1 und die zweite Längsausdehnung L2 jeden geeigneten Wert aufweisen.

Die Adaptereinheit 15 weist eine erste Befestigungseinheit 10 in Form eines Gewindeelements auf, welche an der ersten Durchgangsöffnung 14 der zweiten Scheibe 3 angeordnet ist. Insbesondere ist es vorgesehen, dass die erste Befestigungseinheit 10 durch die erste Durchgangsöffnung 14 an der zweiten Scheibe 3 für einen Nutzer zur Montage von weiteren Einheiten an das Glaselement 1 zugänglich ist. Die erste Scheibe 2 weist bei dieser Ausführungsform keine Durchgangsöffnung auf. Die erste Befestigungseinheit 10 ist derart in der ersten Durchgangsöffnung 14 der zweiten Scheibe 3 angeordnet, dass ein Rand 11 der ersten Durchgangsöffnung 14 von der ersten Befestigungseinheit 10 und von der Adaptereinheit 15 nicht berührt wird.

Die **Figur 2** zeigt eine weitere Schnittdarstellung des erfindungsgemäßen Glaselements 1. Die Ausführungsform gemäß der **Figur 2** beruht auf der Ausführungsform gemäß der **Figur 1****.** Gleiche Bezugszeichen beziehen sich auf gleiche Bauteile. Im Unterschied zu der Ausführungsform gemäß der **Figur 1** ist bei der Ausführungsform der **Figur 2** in der ersten Scheibe 2 eine zweite Durchgangsöffnung 18 angeordnet. Die zweite Durchgangsöffnung 18 fluchtet mit der ersten Durchgangsöffnung 14. Ferner weist die Adaptereinheit 15 eine zweite Befestigungseinheit 19 in Form eines Gewindeelements auf. Die zweite Befestigungseinheit 19 ist in der zweiten Durchgangsöffnung 18 der ersten Scheibe 2 angeordnet. Somit ist es bei dieser Ausführungsform der **Figur 2** vorgesehen, dass sowohl in der ersten Scheibe 2 als auch in der zweiten Scheibe 3 jeweils eine Durchgangsöffnung und jeweils eine Befestigungseinheit angeordnet sind. Die zweite Befestigungseinheit 19 ist derart in der zweiten Durchgangsöffnung 18 angeordnet, dass die zweite Befestigungseinheit 19 und die Adaptereinheit 15 einen Rand 20 der zweiten Durchgangsöffnung 18 der ersten Scheibe 2 nicht berührt. Die Adaptereinheit 15 ist bei der Ausführungsform gemäß der **Figur 2** einstückig ausgebildet. Bei einer weiteren (nicht dargestellten) Ausführungsform ist die Adaptereinheit beispielsweise mehrteilig ausgebildet, wobei jeweils ein Teil der Adaptereinheit einer der Durchgangsöffnungen zugeordnet ist.

Die **Figur 3** zeigt eine weitere Schnittdarstellung des erfindungsgemäßen Glaselements 1. Die Ausführungsform gemäß der **Figur 3** beruht auf der Ausführungsform gemäß der **Figur 2****.** Gleiche Bezugszeichen beziehen sich auf gleiche Bauteile. Im Unterschied zu der Ausführungsform gemäß der **Figur 2** ist bei der Ausführungsform der **Figur 3** die Zwischenschicht 8 mehrteilig ausgebildet. So ist die Zwischenschicht 8 aus einer ersten Schicht 8A und einer zweiten Schicht 8B gebildet.

Das Glaselement 1 weist den Vorteil auf, dass bei Ausübung von Druck von der zweiten Seite 5 der ersten Scheibe 2 in Richtung der Zwischenschicht 8 und von der zweiten Seite 7 der zweiten Scheibe 3 in Richtung der Zwischenschicht 8 keine Quetschung der Zwischenschicht 8 erfolgt. Die Abstandsplatte 9 verhindert diese Quetschung. Somit wird stets die Funktion der Zwischenschicht 8 im Verbundsicherheitsglas gewährleistet.

Ferner ermöglicht das Glaselement 1, dass Scherbewegungen und Schwingungsbewegungen im Bereich der ersten Befestigungseinheit 10 und/oder der zweiten Befestigungseinheit 19 verringert werden, so dass wenig Luft, Feuchtigkeit und gegebenenfalls wenig Chemikalien in den Verbund aus der ersten Scheibe 2, der zweiten Scheibe 3 und der Zwischenschicht 8 eindringen und eine Delaminierung verursachen können.

Bei der Ausführungsform des Glaselements 1 gemäß der **Figur 1** ist nur eine der beiden Scheiben 2, 3 mit einer Durchgangsöffnung versehen, nämlich die zweite Scheibe 3. Somit weist die erste Scheibe 2 die zweite Seite 5 mit einer Scheibenfläche als Außenfläche auf, die eben ausgebildet ist. Ein Abziehen der zweiten Seite 5 mit einem Abzieher zur Reinigung und Trockenlegung der zweiten Seite 5 ist dann einfach möglich.

Das Glaselement 1 gewährleistet auch die Anordnung eines Beschlags und/oder eines Scharniers an einem mehrscheibigen Isolierglas, da nur eine der Scheiben eine Durchgangsöffnung aufweisen kann. Der Hohlraum, welcher das Isoliergas aufweist und durch weitere Scheiben (nicht dargestellt) gebildet ist, ist weiterhin dicht, so dass kein Gas aus dem Hohlraum des Isolierglases austreten kann oder aufwendige Abdichtungsmaßnahmen vorgenommen werden müssen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Glaselement
- 2: erste Scheibe
- 3: zweite Scheibe
- 4: erste Seite der ersten Scheibe
- 5: zweite Seite der ersten Scheibe
- 6: erste Seite der zweiten Scheibe
- 7: zweite Seite der zweiten Scheibe
- 8: Zwischenschicht
- 8A: erste Schicht
- 8B: zweite Schicht
- 9: Abstandsplatte (beispielsweise eine Metallplatte)
- 10: erste Befestigungseinheit
- 11: Rand

- 13: Teilbereich des Glaselements
- 14: erste Durchgangsöffnung der zweiten Scheibe
- 15: Adaptereinheit aus Metall
- 16: Kleber

- 18: zweite Durchgangsöffnung der ersten Scheibe
- 19: zweite Befestigungseinheit
- 20: Rand

- L1: erste Längsausdehnung
- L2: zweite Längsausdehnung

## Patentansprüche

1. Glaselement (1), mit
- mindestens einer ersten Scheibe (2), die aus Glas gebildet ist,
- mindestens einer zweiten Scheibe (3), und mit
- mindestens einer Zwischenschicht (8), wobei die Zwischenschicht (8) zwischen der ersten Scheibe (2) und der zweiten Scheibe (3) angeordnet ist,
wobei
- die erste Scheibe (2) eine erste Seite (4) und eine zweite Seite (5) aufweist, wobei die erste Seite (4) an der Zwischenschicht (8) angeordnet ist,
- eine Adaptereinheit (15) an der ersten Seite (4) der ersten Scheibe (2) mittels eines aushärtbaren Glas/Materialklebers (16) verklebt ist,
- die Adaptereinheit (15) eine Abstandsplatte (9) aufweist, wobei die Abstandsplatte (9) sich entlang der ersten Scheibe (2) und der zweiten Scheibe (3) erstreckt,
- die Zwischenschicht (8) sich von der ersten Scheibe (2) bis zur zweiten Scheibe (3) mit einer ersten Längsausdehnung (L1) erstreckt,
- die Abstandsplatte (9) sich von der ersten Scheibe (2) bis zur zweiten Scheibe (3) mit einer zweiten Längsausdehnung (L2) erstreckt, und wobei
- erste Längsausdehnung (L1) identisch zur zweiten Längsausdehnung (L2) ist.

2. Glaselement (1) nach Anspruch 1, wobei das Glaselement (1) mindestens eines der folgenden Merkmale aufweist:
- die Adaptereinheit (15) ist aus Metall gebildet;
- die Adaptereinheit (15) ist aus Edelstahl gebildet;
- die Adaptereinheit (15) ist aus einem Material gebildet, das eine Festigkeit wie Metall aufweist;
- die Adaptereinheit (15) ist aus Keramik gefertigt;
- die Abstandsplatte (9) ist als Metallplatte ausgebildet;
- die Abstandsplatte (9) ist aus Edelstahl gebildet;
- die Abstandsplatte (9) ist aus einem Material gebildet, das eine Festigkeit wie Metall aufweist;
- die Abstandsplatte (9) ist aus Kunststoff gefertigt;
- die Abstandsplatte (9) ist aus Keramik gefertigt;
- der Glas/Materialkleber (16) ist ein Glas/Metallkleber.

3. Glaselement (1) nach Anspruch 1 oder 2, wobei
- die Adaptereinheit (15) eine Befestigungseinheit (10) aufweist,
- die Befestigungseinheit (10) an einer Durchgangsöffnung (14) der zweiten Scheibe (3) angeordnet ist, und wobei
- die Befestigungseinheit (10) in der Durchgangsöffnung (14) angeordnet und einen Rand (11) der Durchgangsöffnung (14) nicht berührt.

4. Glaselement (1) nach Anspruch 3, wobei die Befestigungseinheit (10) als Gewindeelement ausgebildet ist.

5. Glaselement (1) nach Anspruch 3 oder 4, wobei
- die Befestigungseinheit (10) eine erste Befestigungseinheit ist,
- die Adaptereinheit (15) eine zweite Befestigungseinheit (19) aufweist, und wobei
- die zweite Befestigungseinheit (19) an einer Durchgangsöffnung (19) der ersten Scheibe (2) angeordnet ist.

6. Glaselement (1) nach Anspruch 5, wobei die zweite Befestigungseinheit (19) als Gewindeelement ausgebildet ist.

7. Glaselement (1) nach einem der vorangehenden Ansprüche, wobei der Glas/Materialkleber ein mittels Licht aushärtbarer Kleber auf Akrylatbasis ist.

8. Glaselement (1) nach einem der vorangehenden Ansprüche, wobei die erste Scheibe (2), die zweite Scheibe (3) und/oder die Zwischenschicht (8) transparent ausgebildet sind.

9. Glaselement (1) nach einem der vorangehenden Ansprüche, wobei die Zwischenschicht (8) aus Polyvinylbutyral (PVB) und/oder Ethylenvinylacetat (EVA) ausgebildet ist.

10. Glaselement (1) nach einem der vorangehenden Ansprüche, wobei die Zwischenschicht (8) mindestens eine erste Schicht (8A) und mindestens eine zweite Schicht (8B) aufweist.

11. Glaselement (1) nach einem der vorangehenden Ansprüche, wobei die zweite Scheibe (3) aus Glas und/oder Kunststoff gebildet ist.

12. Glaselement (1) nach einem der vorangehenden Ansprüche, wobei die Abstandsplatte (9) sich in einem Teilbereich (13) entlang der ersten Scheibe (2) und der zweiten Scheibe (3) erstreckt, wobei die Abstandsplatte (9) von der Zwischenschicht (8) umgeben ist und wobei die Abstandsplatte (9) die Zwischenschicht (8) im Teilbereich (13) ersetzt.
